# EUROPÄISCHE PATENTSCHRIFT

(11) **EP 0 945 671 B1**
(45) Veröffentlichungstag und Bekanntmachung des Hinweises auf die Patenterteilung: **29.11.2006**
(21) Anmeldenummer: 99102649.3
(22) Anmeldetag: 12.02.1999
(51) Int. Cl.: F21S 19/00, F21S 8/10, F21S 13/00

(54) **Lampenträger für eine Fahrzeugleuchte**
Lamp holder for vehicle light
Porte lampe de feux pour véhicule

(30) Priorität: 21.03.1998 DE 19812493
(43) Veröffentlichungstag der Anmeldung: 29.09.1999
(73) Patentinhaber: VALEO Beleuchtung Deutschland GmbH, 74321 Bietigheim-Bissingen (DE)
(72) Erfinder: Lendle, Reiner, 74855 Haamersheim (DE); Wellhäusser, Martin, 74343 Sachsenheim (DE)
(74) Vertreter: Dreiss, Fuhlendorf, Steimle & Becker

(56) Entgegenhaltungen:
- EP-A- 0 020 035
- GB-A- 2 053 440

## Beschreibung

Lampenträger für eine Fahrzeugleuchte gemäß den Merkmalen des Oberbegriffs des Anspruchs 1.

Lampenträger sind beispielsweise aus der DE-C-31 28 296, der DE-U-82 04 529 oder der DE-C-33 42 382 bekannt. In allen diesen drei Fällen sind die Lampenträger für multifunktionale Heckleuchten von Fahrzeugen bestimmt, deren Leuchtengehäuse mehrere Leuchtenkammern zur Aufnahme jeweils einer Glühlampe zur Abgabe eines Lichtsignals aufweisen. Der Lampenträger, der lösbar an dem Leuchtengehäuse zu haltern ist, besteht aus einem plattenartigen Kunststoffteil, welches mit Leiterbahnen zur Stromversorgung der Glühlampen bestückt ist. In das Kunststoffteil sind Lampenfassungen eingearbeitet, die jeweils den Sockel einer Glühlampe aufnehmen können. Die Leiterbahnen sind in der Art einer aus Blech ausgestanzten Leiterplatine ausgebildet und an dem Kunststoffteil befestigt. Entsprechend der Funktion der Fahrzeugleuchte führen die Leiterbahnen von ihrem zumeist als Steckkontakt ausgebildeten Ende zu dem entsprechenden Sockel bzw. Mittenkontakt der zugeordneten Glühlampe. Derartige Lampenträger haben sich für Fahrzeugleuchten in der Praxis vielfach bewährt. Ein Problem besteht jedoch darin, dass neue Fahrzeugmodelle zumeist mit neuen Fahrzeugleuchten ausgestattet werden, deren Gehäuse jeweils eine spezielle, an das Fahrzeug angepasste Geometrie aufweisen. Dadurch bedingt müssen die den verschiedenen Funktionen zugeordneten Glühlampen an den verschiedenen Leuchten in verschiedenen Abständen zueinander angeordnet sein. Dementsprechend ist es erforderlich, jeden dieser speziellen Leuchtentypen mit einem Lampenträger auszustatten, dessen Geometrie speziell an diesen Leuchtentyp angepasst ist.

Die GB-A-2 053 440 zeigt eine Fahrzeugleuchte mit mehreren Glühlampen mit den Merkmalen des Oberbegriffs des Anspruchs 1. Diese Fahrzeugleuchte besitzt eine starre Größe.

Die Aufgabe der Erfindung besteht deshalb darin, die Vielfalt der erforderlichen Lampenträger zu verringern.

Diese Aufgabe wird durch einen Lampenträger mit den Merkmalen des Anspruchs 1 gelöst.

Es ist vorgesehen, dass der Lampenträger aus wenigstens zwei Modulen zusammengesetzt ist, die jeweils mit wenigstens einer Lampenfassung für eine Glühlampe und Leiterbahnen zur Stromversorgung der Glühlampen ausgestattet sind. Bei entsprechender Gestaltung der Module ist es möglich, dass aus diesen Modulen verschiedene Lampenträger erstellt werden, die jeweils für eine Fahrzeugleuchte mit einer unterschiedlichen geometrischen Gliederung bzw. Anordnung der Glühlampen geeignet sind. Dabei können die einzelnen Module in unterschiedlicher Form zusammengefügt werden, so dass sich der Abstand der Glühlampen voneinander entsprechend ändert. Wegen des modularen Aufbaus kann also die ansonsten erforderliche Vielfalt an unterschiedlich ausgebildeten Lampenträgern verringert werden. Vorteilhafte Ausgestaltungen der Erfindung ergeben sich aus den Merkmalen der Unteransprüche 2 bis 11.

Eine einfache Einstellung bzw. Verstellung des Abstandes zwischen den Lampenfassungen des modular aufgebauten Lampenträgers ist dann gewährleistet, wenn die wenigstens zwei, zu einem Lampenträger zusammengefügten Module längsverschiebbar und dabei in verschiedenen Positionen arretierbar miteinander verbunden sind. Eine sehr einfache und dabei sichere Einstellung unterschiedlicher Abstände zwischen den Glühlampen bzw. Lampenfassungen eines Lampenträgers wird durch eine vorteilhafte Ausgestaltung der Erfindung gemäss Anspruch 2 ermöglicht, wonach die Arretierung der Längsverschiebung zwischen zwei Modulen mittels an den Modulen vorgesehenen Rastelementen erfolgt, die in einem entsprechenden Abstandsraster angeordnet und in entsprechender Stellung in gegenseitigen Eingriff bringbar sind.

Eine besondere Ausführung der Erfindung gemäss Anspruch 3 sieht vor, dass jedes der mindestens zwei zu einem Lampenträger gehörenden Module über einen separaten Anschluss mit Strom versorgbar ist. Daraus ergibt sich die Möglichkeit, einfach nur die aus elektrisch isolierendem Material bestehenden Körper der Module miteinander zu verbinden, ohne noch zusätzlich für eine elektrische Kontaktierung der jeweils zusammengehörenden aber auf verschiedenen Modulen angebrachten Leiterbahnen sorgen zu müssen.

Für solche Fälle, in denen der Verstellbereich der zwischen den Modulen vorgesehenen Längsverstellung zur Anpassung des Abstandes zwischen den Lampenfassungen an die geometrischen Verhältnisse einer bestimmten Fahrzeugleuchte nicht ausreichen sollte, wird eine Ausgestaltung der Erfindung gemäss Anspruch 4 empfohlen, welche die zusätzliche Anordnung eines Modules ohne Lampenfassung zwischen zwei mit jeweils mindestens einer Lampenfassung ausgestatteten Modulen vorsieht. Auf diese Weise sind noch größere Änderungen des Abstandes zwischen den Lampenfassungen zweier Module möglich.

Eine andere besondere Ausführung der Erfindung gemäss Anspruch 5 ist dadurch gekennzeichnet, dass alle zu einem Lampenträger gehörenden Module über einen gemeinsamen Anschluss mit Strom versorgbar sind. Diese Ausführung vereinfacht die Handhabung beim Herstellen des elektrischen Anschlusses der Fahrzeugleuchte, wobei durch entsprechend codierte Steckanschlüsse eine Verwechslungsgefahr ausgeschlossen und ein exakter elektrischer Anschluss der Fahrzeugleuchte gewährleistet ist.

Eine Weiterbildung der Erfindung gemäss Anspruch 6 ist deshalb von Vorteil, weil bei einer Längsverschiebung von zwei Modulen relativ zueinander zwecks Einstellung des Abstandes zwischen den an diesen Modulen vorgesehenen Lampenfassungen keine zusätzlichen Handhabungen erforderlich sind, um eine entsprechende Längenänderung der zusammengehörenden Leiterbahnen des Lampenträgers herbeizuführen.

Besonders einfach und trotzdem funktionssicher ist in diesem Zusammenhang eine Ausgestaltung der Erfindung gemäss Anspruch 6, welche vorsieht, dass in dem Verbindungs- bzw. Verstellbereich zweier miteinander verbundener Module die Enden der elektrischen Leiterbahnen dieser zwei Module in Richtung der möglichen Längsverschiebung überlappen und dabei federnd aufeinanderliegen.

Wenn bei einem Lampenträger mit einem zentralen Stromanschluss und mit elektrisch miteinander verbundenen Leiterbahnen der Module ein größerer als durch die Längsverschiebbarkeit der Module erreichbarer Abstand zwischen den Lampenfassungen der Module erforderlich ist, empfiehlt sich eine Ausgestaltung der Erfindung gemäss Anspruch 7. Diese sieht vor, dass zwischen zwei derartigen Modulen mit jeweils mindestens einer Lampenfassung ein zusätzliches Modul angeordnet ist, welches keine Lampenfassung trägt, jedoch mit Leiterbahnen ausgestattet ist, welche in der Art einer Überbrückung die entsprechenden Leiterbahnen der beiden Module mit Lampenfassung miteinander verbinden.

In diesem Zusammenhang ist es weiterhin vorteilhaft, wenn entsprechend einer Weiterbildung der Erfindung nach Anspruch 8 die mechanische und/oder die elektrische Verbindung zwischen einem mit einer Lampenfassung und elektrischen Leiterbahnen ausgestatteten Modul und einem mit elektrischen Leiterbahnen ausgestatteten Modul ohne Lampenfassung analog zu der Verbindung zwischen zwei mit einer Lampenfassung und elektrischen Leiterbahnen ausgestatteten Modulen ausgeführt ist.

Je nach den anzutreffenden Platzverhältnissen an der Fahrzeugleuchte bzw. am Fahrzeug kann es von Vorteil sein, gemäss Anspruch 9 den gemeinsamen Stromanschluss für alle zu einem Lampenträger gehörenden Module an einem mit einer Lampenfassung und elektrischen Leiterbahnen ausgestatteten Modul oder an einem mit elektrischen Leiterbahnen ausgestatteten Modul ohne Lampenfassung vorzusehen.

Als besonders vorteilhaft wird eine Ausgestaltung der Erfindung gemäss Anspruch 10 betrachtet. Diese sieht vor, dass die wenigstens zwei mit wenigstens einer Lampenfassung und elektrischen Leiterbahnen ausgestatteten Module, aus denen der Lampenträger zusammengesetzt ist, einander vollkommen gleich sind. Hierdurch können erhebliche Einsparungen an Werkzeugkosten, an Herstellungskosten sowie an Kosten für die Ersatzteilhaltung erzielt werden.

Die Erfindung umfasst auch eine Fahrzeugleuchte gemäss Anspruch 11, die dadurch gekennzeichnet ist, dass sie mit einem Lampenträger gemäss einem der Ansprüche 1 bis 11 ausgestattet ist. Hierbei treffen die gleichen Vorteile wie für die entsprechende Ausführung eines Lampenträgers zu.

Anhand von Ausführungsbeispielen wird die Erfindung nachfolgend näher beschrieben. In der zugehörigen Zeichnung zeigen:
- Fig. 1 und 2: ein erstes Ausführungsbeispiel eines Lampenträgers mit unterschiedlichen Abständen zwischen den Lampenfassungen,
- Fig. 3 und 4: ein zweites Ausführungsbeispiel eines Lampenträgers mit unterschiedlichen Abständen zwischen den Lampenfassungen,
- Fig. 5: ein einzelnes Modul eines Lampenträgers gemäß Fig. 3 und 4,
- Fig. 6: die Ansicht einer Heckleuchtenkombination eines Personenkraftwagens,
- Fig. 7: den senkrechten Schnitt entlang der Linie VII-VII in Fig. 6 und
- Fig. 8: den waagerechten Schnitt entlang der Linie VIII-VIII in Fig. 6.

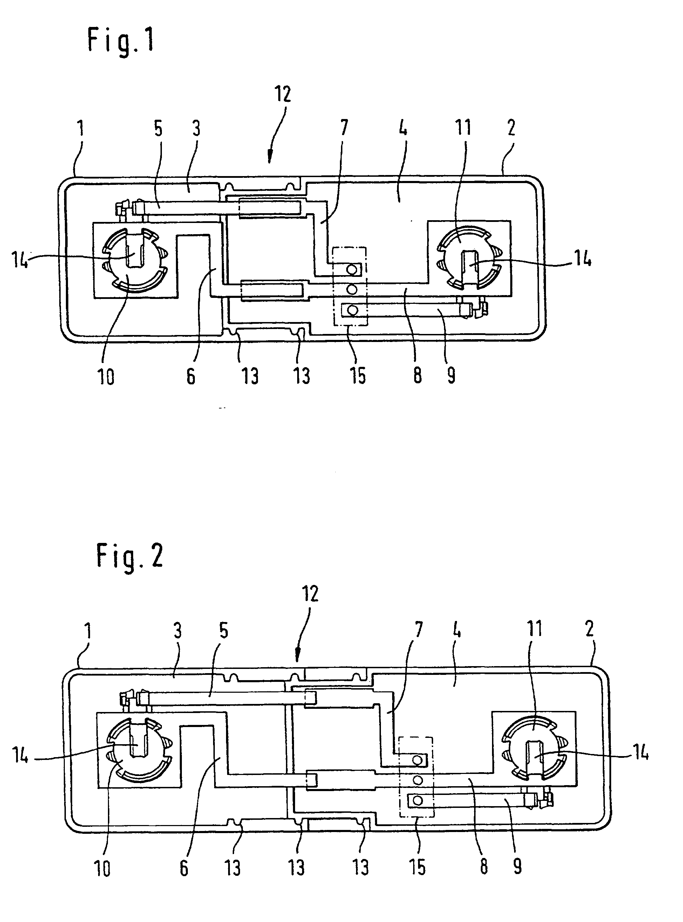

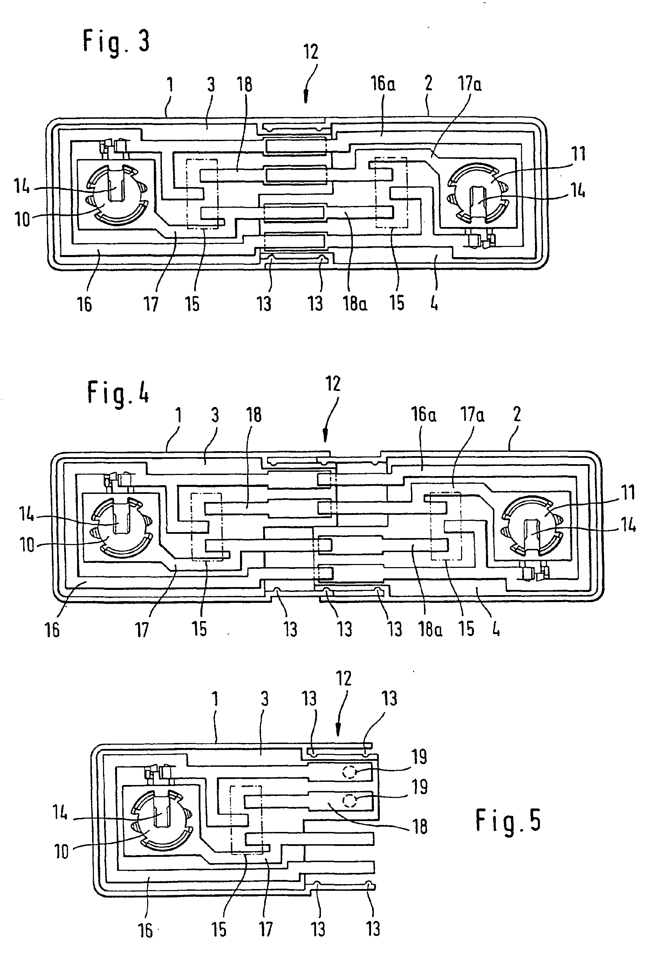

Der in den Fig. 1 und 2 dargestellte Lampenträger ist für die Verwendung an einer Heckleuchte eines Fahrzeuges bestimmt. Er ist aus einem ersten Modul 1 und einem zweiten Modul 2 zusammengesetzt, die miteinander verbunden sind. Jedes der Module 1 bzw. 2 besitzt einen im wesentlichen plattenartigen Grundkörper 3 bzw. 4, auf dem die aus Blech gefertigten Leiterbahnen 5, 6 bzw. 7, 8, 9 in an sich bekannter Art angebracht sind. An dem ersten Modul 1 ist die Lampenfassung 10 und an dem zweiten Modul 2 die Lampenfassung 11 ausgebildet. In dem gemeinsamen Verbindungs- bzw. Verstellbereich 12 sind die Grundkörper 3, 4 der Module 1, 2 längsverschiebbar und dabei in verschiedenen Positionen arretierbar miteinander verbunden. An den Grundkörpern 3, 4 sind deshalb in gegenseitigen Eingriff bringbare Rastelemente 13 in Form von Vorsprüngen und Vertiefungen ausgebildet.

Im vorliegenden Ausführungsbeispiel sind die Rastelemente 13 so angeordnet, daß die Module 1, 2 in einer Position mit kürzerem Abstand zwischen den Lampenfassungen 10, 11 (Fig. 1) und in einer Position mit größerem Abstand zwischen den Lampenfassungen 10, 11 (Fig. 2) aneinander arretierbar sind. Es wäre auch möglich, eine größere Anzahl von Rastelementen vorzusehen, die dann vorzugsweise in einem entsprechenden Abstandsraster angeordnet sind. Dadurch wäre es möglich, die beiden Module 1, 2 in weiteren verschiedenen Positionen aneinander zu arretieren, welche dann weiteren, unterschiedlichen Abständen zwischen den Lampenfassungen 10 und 11 entsprechen würden.

Jede der Lampenfassungen 10, 11 ist in an sich bekannter Art so ausgebildet, daß sie eine für Fahrzeugleuchten übliche Glühlampe aufnehmen und halten kann. Die an den Grundkörpern 3 bzw. 4 angebrachten Leiterbahnen 5, 6 bzw. 7, 8, 9 sind zur Stromversorgung dieser Glühlampen bestimmt. Die Leiterbahnen 7 und 8 sind im Bereich der Lampenfassungen 10 und 11 jeweils so ausgebildet, daß sie mit entsprechend umgebogenen Abschnitten direkt den in die Lampenfassung 10 bzw. 11 eingesetzten Lampensockel kontaktieren. Die Leiterbahnen 5 und 9 sind in der Nähe der Lampenfassung 10 bzw. 11 jeweils mit einer Kontaktfeder 14 verbunden, welche den Mittenkontakt der betreffenden Glühlampe kontaktiert. An dem Modul 2 ist für den zentralen Stromanschluß des Lampenträgers ein Stekkerbereich 15 ausgebildet, in dem die Leiterbahnen 7, 8, 9, beispielsweise über eine Mehrfachsteckverbindung, mit Strom versorgt werden können. Im gemeinsamen Verbindungs- bzw. Verstellbereich 12 der Module 1, 2 wird die Leiterbahn 7 des Moduls 2 von der Leiterbahn 5 des Moduls 1 und die Leiterbahn 8 des Moduls 2 von der Leiterbahn 6 des Moduls 1 kontaktiert. Ausgehend von dem gemeinsamen Steckerbereich 15 sind einerseits eine in die Lampenfassung 11 eingesetzte Glühlampe über die Leiterbahnen 8 und 9 und andererseits eine in die Lampenfassung 10 gesetzte Glühlampe über die elektrisch miteinander verbundenen Leiterbahnen 8 und 6 sowie 7 und 5 wahlweise einzeln oder gemeinsam mit Strom versorgbar. Zwecks Minimierung der Anzahl erforderlicher Anschlußkontakte können in dem Ausführungsbeispiel gemäß Fig. 1 und 2 die elektrisch miteinander verbundenen Leiterbahnen 6 und 8, welche vom gemeinsamen Steckanschluß 15 zu jeweils einer Lampenfassung 10, 11 führen, als gemeinsame Masseleitung an den Stromkreislauf des Fahrzeuges angeschlossen sein.

Zu dem in den Fig. 1 und 2 dargestellten Ausführungsbeispiel ist noch zu bemerken, daß im Sinne der vorliegenden Erfindung das Modul 1 und/oder das Modul 2 auch mit mehr als nur einer Lampenfassung ausgestattet sein könnte. Weiterhin könnte erforderlichenfalls auch ein größerer Abstand zwischen den Lampenfassungen 10 und 11 des Lampenträgers gegenüber der in Fig. 2 gezeigten weitesten Stellung dadurch erreicht werden, daß ein zusätzliches Modul zwischen den gezeigten Modulen 1 und 2 angeordnet wird. Das zusätzliche Modul, welches im Bedarfsfall auch mit einer Lampenfassung ausgestattet sein könnte, wäre dann an seinen gegenüberliegenden Seiten jeweils mit einem Modul 1 bzw. 2 verbunden. Diese Verbindung kann in der gleichen Art längenverschiebbar und arretierbar ausgebildet sein. Dadurch würden sich die Verstellmöglichkeiten des Lampenträgers noch wesentlich erhöhen. Außerdem wäre das zusätzliche Modul mit Leiterbahnen ausgestattet, welche in der Art einer Überbrückung die erforderliche Verbindung zwischen den Leiterbahnen des Moduls 1 und des Moduls 2 herstellen würde. Die Kontaktierung der betreffenden Leiterbahnen würde dann sinnvollerweise in der gleichen Art ausgeführt sein, wie zwischen den Leiterbahnen der Module 1 und 2.

In den Fig. 3 bis 5 ist ein anderes Ausführungsbeispiel eines Lampenträgers für eine Fahrzeugleuchte dargestellt, wobei der Lampenträger in Fig. 3 in der Stellung mit dem geringsten Abstand zwischen den Lampenfassungen 10 und 11 und in Fig. 4 in der Stellung mit dem größten Abstand zwischen den Lampenfassungen 10 und 11 dargestellt ist. Da bei dem in den Fig. 3 und 4 gezeigten Lampenträger die beiden Module 1 und 2 identisch sind, ist in Fig. 5 zur Verdeutlichung nochmals ein Modul 1 gezeigt. In der identischen Ausbildung der beiden für einen Lampenträger erforderlichen Module 1 und 2 liegt ein besonderer Vorteil der Erfindung, weil mit nur einem einzigen Werkzeug die beiden Module einer Lampenfassung hergestellt werden können.

Wie im vorhergehenden Ausführungsbeispiel weisen die Module 1 bzw. 2 jeweils einen Grundkörper 3 bzw. 4 aus Kunststoffmaterial auf, in die jeweils eine Lampenfassung 10 bzw. 11 eingeformt ist. Am Grundkörper 3 des Moduls 1 sind, wie deutlich aus Fig. 5 ersichtlich ist, die aus Blech gefertigten Leiterbahnen 16, 17, 18 angebracht. Die Leiterbahn 16 verläuft U-artig an den Außenseiten des Grundkörpers 3 und zwar so, daß ihre beiden Enden im Verbindungs- bzw. Verstellbereich 12 angeordnet sind. Die mit der Leiterbahn 16 elektrisch leitend verbundene Kontaktfeder 14 führt im Bereich der Lampenfassung 10 zum Mittenkontakt der Glühlampe. Eine Abzweigung der Leiterbahn 16 führt zu dem an dem Modul 1 vorgesehenen Steckerbereich 15, um einen zentralen Stromanschluß der Leiterbahn 16 zu gewährleisten. Die Leiterbahn 17 ist mit einem Ende im Verbindungs- bzw. Verstellbereich 12 angeordnet, und das andere Ende umschließt die Lampenfassung 10, um dort den Sockel einer einzusetzenden Glühlampe zu kontaktieren. Über eine kurze Abzweigung ist auch die Leiterbahn 17 zum zentralen Steckerbereich 15 geführt. Letztendlich führt noch die Leiterbahn 18 vom zentralen Steckerbereich 15 zum Verbindungs- bzw. Verstellbereich 12.

An dem identisch ausgebildeten zweiten Modul 2 sind die entsprechenden Leiterbahnen mit 16a, 17a, 18a bezeichnet.

In den Fig. 3 und 4 ist zu erkennen, daß die freien Enden der Leiterbahnen 16 bzw. 16a der Module 1 und 2 einander wechselseitig in der Art von Schleifkontakten kontaktieren, indem diese Enden einander überlappen und federnd aufeinanderliegen. Weiterhin ist in gleicher Weise die Leiterbahn 17 des ersten Modules 1 mit der Leiterbahn 18a des zweiten Modules 2 und dementsprechend die Leiterbahn 18 des ersten Modules 1 mit der Leiterbahn 17a des zweiten Modules 2 verbunden. Diese elektrische Verbindung der Leiterbahnen untereinander gewährleistet, daß der gesamte Lampenträger wahlweise über den am Modul 1 vorgesehenen zentralen Steckerbereich 15 oder den am Modul 2 vorgesehenen identischen zentralen Steckerbereich 15 an das elektrische Bordnetz des Fahrzeuges anschließbar ist.

Analog zu dem vorhergehenden Ausführungsbeispiel gemäß den Fig. 1 und 2 kann auch bei diesem Ausführungsbeispiel ein zusätzliches Modul zwischen den gezeigten Modulen 1 und 2 angeordnet werden. Außerdem könnte der Verstellbereich 12 für mehrere Raststellungen ausgebildet sein. Um stets eine sichere Kontaktierung der Leiterbahnen der beiden Module 1 und 2 zu gewährleisten, kann, wie in Fig. 5 angedeutet, im Verbindungs- bzw. Verstellbereich 12 unter den verbreiterten Enden der Leiterbahnen 16 und 18 jeweils eine Druckfeder 19 angeordnet sein, die sich mit Vorspannung am Grundkörper 3 des Moduls 1 abstützt. Natürlich wäre in diesem Fall auch das Modul 2 unter den verbreiterten Enden der Leiterbahnen 16a und 18a mit einer entsprechenden Druckfeder 19 ausgestattet.

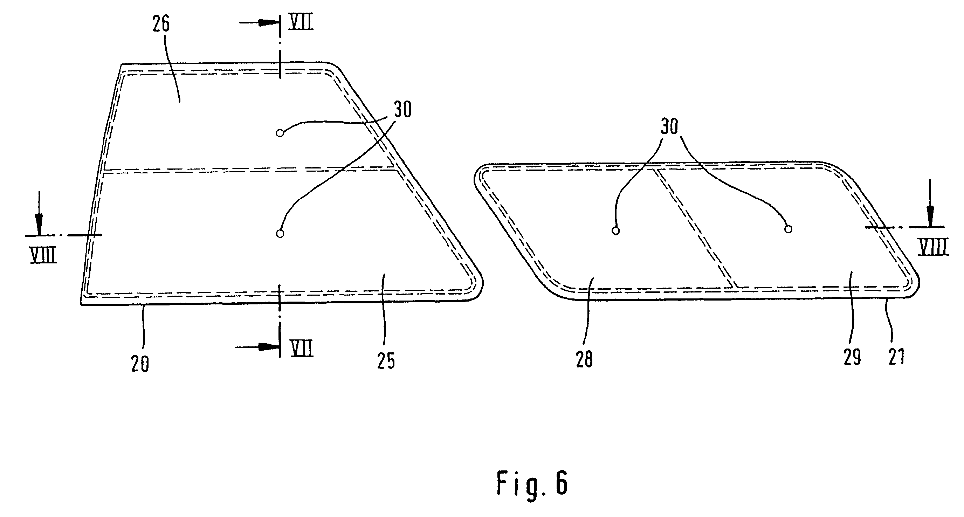

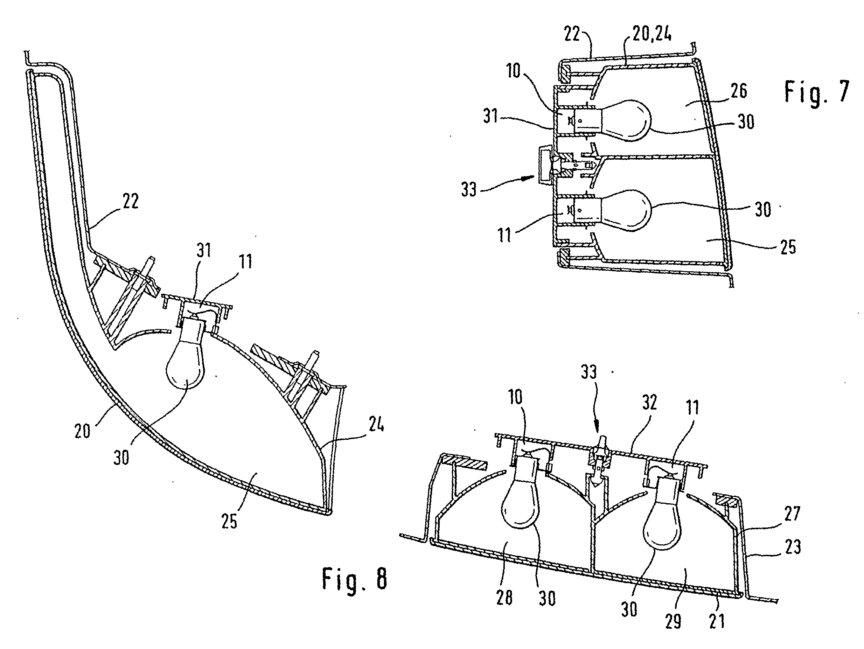

Aus den Fig. 6 bis 8 ist ein Anwendungsbeispiel für erfindungsgemäße Lampenträger ersichtlich. Die hier gezeigte Heckleuchte für einen Personenkraftwagen ist eine Heckleuchtenkombination, die aus den Leuchtenteilen 20 und 21 besteht. Während das Leuchtenteil 20 im Heckbereich des Fahrzeugs unmittelbar an der Karosserie 22 befestigt ist, ist das Leuchtenteil 21 an die verschwenkbare Kofferklappe bzw. Heckklappe 23 des Fahrzeuges angebaut. In dem Gehäuse 24 des Leuchtenteiles 20 sind die übereinander angeordneten Kammern 25 und 26 und in dem Gehäuse 27 des Leuchtenteiles 21 sind nebeneinander die Kammern 28 und 29 ausgebildet. Beide Gehäuse 24 und 27 sind an ihrer Lichtaustrittsseite mit einer Scheibe verschlossen, die entsprechend der Signalfunktion im Bereich der Kammern 25, 26 und 28, 29 entsprechend eingefärbt sein kann. In jeder der Kammern 25, 26, 28, 29 ist eine Glühlampe 30 angeordnet. Während in den Fig. 7 und 8 die Glühlampen 30 sichtbar sind, sind ihre Positionen in Fig. 6 lediglich durch Punkte angegeben. Wesentlich an der in den Fig. 6 bis 8 dargestellten Heckleuchtenkombination ist, daß an dem Leuchtenteil 20 ein erfindungsgemäß ausgebildeter Lampenträger 31 und am Leuchtenteil 21 ein erfindungsgemäß ausgebildeter Lampenträger 32 zur Anwendung kommen. Die Lampenträger 31 und 32 sind jeweils aus zwei Modulen zusammengesetzt, die wiederum jeweils mit einer Lampenfassung 10 bzw. 11 zur Aufnahme einer Glühlampe 30 ausgebildet sind. Die Lampenträger 31 und 32 sind jeweils über eine Verriegelungsvorrichtung 33 lösbar an der Rückseite der Leuchtengehäuse 24 bzw. 27 in der Art gehalten, daß die in den Lampenfassungen 10 und 11 angeordneten Glühlampen 30 jeweils durch eine Öffnung in der Rückseite des Gehäuses 24 bzw. 27 in die entsprechende Leuchtenkammer 25, 26 bzw. 28, 29 ragen. Während der Lampenträger 31 mit seiner Längsrichtung im wesentlichen senkrecht an dem Gehäuse 24 angeordnet ist, ist der Lampenträger 32 mit seiner Längsrichtung im wesentlichen waagerecht an dem Gehäuse 27 angeordnet. In den Fig. 7 und 8 ist erkennbar, daß die Lampenfassungen 10 und 11 der Lampenträger 31 und 32 jeweils in einem unterschiedlichen Abstand zueinander angeordnet sind, nämlich ist bei dem Lampenträger 32 am Leuchtenteil 21 der Abstand zwischen den Lampenfassungen 10 und 11 größer als bei dem Lampenträger 31 am Leuchtenteil 20. Dieses wurde dadurch erreicht, daß die ansonsten bei beiden Lampenträgern 31 und 32 gleichartigen Module unter Ausnutzung der Längsverschiebbarkeit in ihrem gemeinsamen Verbindungs- bzw. Verstellbereich in unterschiedlicher Stellung miteinander verbunden bzw. aneinander arretiert sind. Durch die erfindungsgemäße Ausbildung der Lampenträger 31, 32 ist es also möglich, diese an verschiedenen Gehäusen 24, 27 zu verwenden, obwohl die vorherrschenden geometrischen Verhältnisse jeweils einen anderen Abstand zwischen den Lampenfassungen 10, 11 erfordern. Nach dem herkömmlichen Stand der Technik hätten an die jeweiligen geometrischen Verhältnisse angepaßte verschiedene Lampenträger hergestellt werden müssen. Die Vorteile der Erfindung liegen somit klar auf der Hand.

Bezugszeichenliste
- 1: Modul
- 2: Modul
- 3: Grundkörper
- 4: Grundkörper
- 5: Leiterbahn
- 6: Leiterbahn
- 7: Leiterbahn
- 8: Leiterbahn
- 9: Leiterbahn
- 10: Lampenfassung
- 11: Lampenfassung
- 12: Verbindungs- bzw. Verstellbereich
- 13: Rastelement
- 14: Kontaktfeder
- 15: Steckerbereich
- 16: Leiterbahn
- 16a: Leiterbahn
- 17: Leiterbahn
- 17a: Leiterbahn
- 18: Leiterbahn
- 18a: Leiterbahn
- 19: Druckfeder
- 20: Leuchtenteil
- 21: Leuchtenteil
- 22: Karosserie
- 23: Kofferklappe bzw. Heckklappe
- 24: Gehäuse
- 25: Kammer
- 26: Kammer
- 27: Gehäuse
- 28: Kammer
- 29: Kammer
- 30: Glühlampe
- 31: Lampenträger
- 32: Lampenträger
- 33: Verriegelungsvorrichtung

## Patentansprüche

1. Lampenträger für eine Fahrzeugleuchte mit wenigstens zwei Lampenfassungen (10, 11) zur Aufnahme von Glühlampen (30), wobei die mindestens zwei Glühlampen (30) mit Abstand zueinander in dem Gehäuse (24, 27) der Fahrzeugleuchte anzuordnen sind, indem die an dem Lampenträger (31 ,32) gehaltenen, wenigstens zwei Glühlampen (30) durch eine Öffnung in das Leuchtengehäuse (24, 27) ragen und der Lampenträger (31, 32) lösbar an dem Leuchtengehäuse (24, 27) zu haltern ist, und wobei der Lampenträger (31, 32) mit elektrischen Leiterbahnen (5-9, 16-18, 16a- 18a) zur Stromversorgung der Glühlampen (30) ausgestattet ist, und wobei der Lampenträger (31, 32) aus wenigstens zwei Modulen (1, 2) zusammengesetzt ist, die jeweils mit wenigstens einer Lampenfassung (10, 11) für eine Glühlampe (30) und Leiterbahnen (5-9, 16-18, 16a-18a) zur Stromversorgung der Glühlampen (30) ausgestattet sind, **dadurch gekennzeichnet, dass** die wenigstens zwei Module (1, 2) längsverschiebbar und dabei in verschiedenen Positionen arretierbar miteinander verbunden sind.

2. Lampenträger nach Anspruch 1, **dadurch gekennzeichnet, dass** die Arretierung der Längsverschiebung zwischen zwei Modulen (1, 2) mittels in einem entsprechenden Abstandsraster an den Modulen (1, 2) vorgesehenen Rastelementen (13) erfolgt, die entsprechend in gegenseitigen Eingriff bringbar sind.

3. Lampenträger nach einem der vorhergehenden Ansprüche, **dadurch gekennzeichnet, dass** jedes der mindestens zwei Module (1, 2) über einen separaten Anschluss mit Strom versorgbar ist.

4. Lampenträger nach einem der vorhergehenden Ansprüche, **dadurch gekennzeichnet, dass** zwischen zwei Modulen (1, 2) mit jeweils einer Lampenfassung (10, 11) ein zusätzliches Modul ohne Lampenfassung angeordnet ist.

5. Lampenträger nach Anspruch 1 oder 2, **dadurch gekennzeichnet, dass** alle zu einem Lampenträger gehörenden Module (1, 2) über einen gemeinsamen Anschluss mit Strom versorgbar sind.

6. Lampenträger nach Anspruch 5, **dadurch gekennzeichnet, dass** in dem Verbindungs- bzw. Verstellbereich (12) zweier miteinander verbundener Module (1, 2) die Enden der zusammengehörenden elektrischen Leiterbahnen (5-9, 16-18, 16a-18a) dieser zwei Module (1, 2) in Richtung der möglichen Längsverschiebung überlappen und federnd aufeinander liegen.

7. Lampenträger nach einem der vorhergehenden Ansprüche 5 oder 6, **dadurch gekennzeichnet, dass** zwischen zwei Modulen (1, 2) mit jeweils mindestens einer Lampenfassung (10, 11) ein zusätzliches Modul ohne Lampenfassung angeordnet ist, welches mit die entsprechenden Leiterbahnen (5-9, 16-18, 16a-18a) der zwei Module (1, 2) mit Lampenfassung (10, 11) miteinander verbindenden elektrischen Leiterbahnen ausgestattet ist.

8. Lampenträger nach Anspruch 7, **dadurch gekennzeichnet, dass** die mechanische und/oder die elektrische Verbindung zwischen einem mit einer Lampenfassung (10, 11) und elektrischen Leiterbahnen (5-9, 16-18, 16a-18a) ausgestatteten Modul (1, 2) und einem mit elektrischen Leiterbahnen ausgestatteten Modul ohne Lampenfassung analog der Verbindung zwischen zwei mit einer Lampenfassung (10, 11) und elektrischen Leiterbahnen (5-9, 16-18, 16a-18a) ausgestatteten Modulen (1, 2) ausgeführt ist.

9. Lampenträger nach einem der Ansprüche 5 bis 8, **dadurch gekennzeichnet, dass** der gemeinsame Stromanschluss für alle zu einem Lampenträger gehörenden Module (1, 2) an einem mit einer Lampenfassung (10, 11) und elektrischen Leiterbahnen (5-9, 16-18, 16a-18a) ausgestatteten Modul (1, 2) oder an einem mit elektrischen Leiterbahnen ausgestatteten Modul ohne Lampenfassung vorgesehen ist.

10. Lampenträger nach einem der vorhergehenden Ansprüche, **dadurch gekennzeichnet, dass** die wenigstens zwei jeweils mit wenigstens einer Lampenfassung (10, 11) und elektrischen Leiterbahnen (5-9, 16-18, 16a-18a) ausgestatteten Module (1, 2) zueinander gleich sind.

11. Fahrzeugleuchte, **dadurch gekennzeichnet, dass** sie mit einem Lampenträger gemäss einem der vorhergehenden Ansprüche ausgestattet ist.

## Claims

1. A bulb holder for a vehicle light, having at least two bulb sockets (10, 11) for receiving incandescent bulbs (30), in which the at least two incandescent bulbs (30) are to be disposed spaced apart from one another in the housing (24, 27) of the vehicle light in that the at least two incandescent bulbs (30), retained on the bulb holder (31, 32), protrude through an opening into the light housing (24, 27), and the bulb holder (31, 32) is to be retained detachably on the light housing (24, 27), and in which the bulb holder (31, 32) is equipped with electric conductor tracks (5-9, 16-18, 16a-18a) for supplying power to the incandescent bulbs (30), and in which the bulb holder (31, 32) is composed of at least two modules (1, 2), which are each equipped with at least one bulb socket (10, 11) for an incandescent bulb (30) and with conductor tracks (5-9, 16-18, 16a-18a) for supplying power to the incandescent bulbs (30), **characterized in that** the at least two modules (1, 2) are connected to one another longitudinally displaceably and lockably in various positions.

2. The bulb holder as defined by claim 1, **characterized in that** the locking of the longitudinal displacement between two modules (1, 2) is effected by means of detent elements (13), which are provided in a suitable spacing matrix on the modules (1, 2) and can be suitably brought into mutual engagement.

3. The bulb holder as defined by one of the foregoing claims, **characterized in that** each of the at least two modules (1, 2) can be supplied with power via a separate terminal.

4. The bulb holder as defined by one of the foregoing claims, **characterized in that** disposed between two modules (1, 2), each having a bulb socket (10, 11), is one additional module without a bulb socket.

5. The bulb holder as defined by claim 1 or 2, **characterized in that** all the modules (1, 2) belonging to one bulb holder can be supplied with power via one common terminal.

6. The bulb holder as defined by claim 5, **characterized in that** in the connection or adjustment region (12) of two modules (1, 2) connected to one another, the ends of associated electric conductor tracks (5-9, 16-18, 16a-18a) of these two modules (1, 2) overlap in the direction of the possible longitudinal displacement and rest resiliently on one another.

7. The bulb holder as defined by one of the foregoing claims 5 or 6, **characterized in that** disposed between two modules (1, 2), each having a bulb socket (10, 11), is one additional module without a bulb socket, which additional module is equipped with electric conductor tracks that connect the various conductor tracks (5-9, 16-18, 16a-18a) of the two modules (1, 2) having a bulb socket (10, 11) to one another.

8. The bulb holder as defined by claim 7, **characterized in that** the mechanical and/or the electrical connection between a module (1, 2) that is equipped with a bulb socket (10, 11) and with electric conductor tracks (5-9, 16-18, 16a-18a) and a module that is equipped with electric conductor tracks but without a bulb socket is embodied analogously to the connection between two modules (1, 2) that are equipped with a bulb socket (10, 11) and with electric conductor tracks (5-9, 16-18, 16a-18a).

9. The bulb holder as defined by one of claims 5 through 8, **characterized in that** the common power supply connection for all the modules (1, 2) belonging to one bulb holder is provided on a module (1, 2) that is equipped with a bulb socket (10, 11) and with electric conductor tracks (5-9, 16-18, 16a-18a), or on a module that is equipped with electric conductor tracks but without a bulb socket.

10. The bulb holder as defined by one of the foregoing claims, **characterized in that** the at least two modules (1, 2) that are each equipped with at least one bulb socket (10, 11) and with electric conductor tracks (5-9, 16-18, 16a-18a) are identical to one another.

11. A vehicle light, **characterized in that** it is equipped with a bulb holder as defined by one of the foregoing claims.

## Revendications

1. Porte-lampe pour un projecteur de véhicule, comportant au moins deux douilles de lampe (10, 11) destinées à recevoir des ampoules (30), lesdites au moins deux ampoules (30) étant destinées à être agencées à distance l'une de l'autre dans le boîtier (24, 27) du projecteur de véhicule, alors que lesdites au moins deux ampoules (30), maintenues sur le porte-lampe (31, 32), s'avancent à l'intérieur du boîtier de projecteur (24, 27) en traversant une ouverture et le porte-lampe (31, 32) est destiné à être fixé de manière amovible contre le boîtier de projecteur (24, 27), et le porte-lampe (31, 32) étant équipé de bandes électroconductrices (5-9, 16-18, 16a-18a) pour l'alimentation en courant des ampoules (30), et le porte-lampe (31, 32) étant formé par au moins deux modules (1, 2), qui sont équipés chacun d'au moins une douille de lampe (10, 11) pour une ampoule (30) et de bandes électroconductrices (5-9, 16-18, 16a-18a) pour l'alimentation en courant des ampoules (30), **caractérisé en ce que** lesdits au moins deux modules (1, 2) sont mobiles dans le sens longitudinal et, de plus, sont assemblés l'un à l'autre de manière à pouvoir être immobilisés dans différentes positions.

2. Porte-lampe selon la revendication 1, **caractérisé en ce que** l'immobilisation du mouvement longitudinal entre deux modules (1, 2) est assurée au moyen d'éléments d'arrêt (13), qui sont prévus dans une trame d'écartement sur les modules (1, 2) et qui peuvent être amenés de manière correspondante en prise mutuelle.

3. Porte-lampe selon l'une quelconque des revendications précédentes, **caractérisé en ce que** chacun desdits au moins deux modules (1, 2) peut être alimenté en courant par un branchement séparé.

4. Porte-lampe selon l'une quelconque des revendications précédentes, **caractérisé en ce que**, entre deux modules (1, 2) comportant chacun une douille de lampe (10, 11), est agencé un module supplémentaire sans douille de lampe.

5. Porte-lampe selon la revendication 1 ou 2, **caractérisé en ce que** tous les modules (1, 2) appartenant à un porte-lampe peuvent être alimentés en courant par l'intermédiaire d'un branchement commun.

6. Porte-lampe selon la revendication 5, **caractérisé en ce que**, dans la zone d'assemblage ou de réglage (12) de deux modules (1, 2) reliés l'un à l'autre, les extrémités des bandes électroconductrices (5-9, 16-18, 16a-18a) associées de ces deux modules (1, 2) se chevauchent dans la direction du mouvement longitudinal possible et sont élastiquement en appui l'une sur l'autre.

7. Porte-lampe selon l'une des revendications précédentes 5 ou 6, **caractérisé en ce qu'**entre deux modules (1, 2) comportant chacun au moins une douille de lampe (10, 11) est agencé un module supplémentaire sans douille de lampe, lequel est équipé de bandes électroconductrices reliant entre elles les bandes électroconductrices (5-9, 16-18, 16a-18a) correspondantes des deux modules (1, 2) avec douille de lampe (10, 11).

8. Porte-lampe selon la revendication 7, **caractérisé en ce que** la liaison mécanique et/ou la liaison électrique entre un module (1, 2), équipé d'une douille de lampe (10, 11) et de bandes électroconductrices (5-9, 16-18, 16a-18a), et un module sans douille de lampe et équipé de bandes électroconductrices est réalisée de manière analogue à la liaison entre deux modules (1, 2), équipés d'une douille de lampe de lampe (10, 11) et de bandes électroconductrices (5-9, 16-18, 16a-18a).

9. Porte-lampe selon l'une quelconque des revendications 5 à 8, **caractérisé en ce que** le branchement de courant commun pour tous les modules (1, 2) appartenant à un porte-lampe est prévu sur un module (1, 2), équipé d'une douille de lampe (10, 11) et de bandes électroconductrices (5-9, 16-18, 16a-18a), ou sur un module sans douille de lampe et équipé de bandes électroconductrices.

10. Porte-lampe selon l'une quelconque des revendications précédentes, **caractérisé en ce que** lesdits au moins deux modules (1, 2), équipés chacun d'au moins une douille de lampe (10, 11) et de bandes électroconductrices (5-9, 16-18, 16a-18a), sont identiques entre eux.

11. Projecteur de véhicule, **caractérisé en ce qu'**il est équipé d'un porte-lampe selon l'une quelconque des revendications précédentes.
